# EUROPEAN PATENT APPLICATION

(11) **EP 4 687 090 A1**
(43) Date of publication of application: **04.02.2026**
(21) Application number: 24220012.9
(22) Date of filing: 13.12.2024
(51) Int. Cl.: G06Q 20/08, G06Q 20/36, G06Q 30/0251

(54) **SUBSCRIPTION AUTHORIZATION METHOD AND APPARATUS, STORAGE MEDIUM, AND COMPUTER SYSTEM**

(30) Priority: 02.08.2024 SG 10202402323
(71) Applicant: Advanced Nova Technologies (Singapore) Holding Pte. Ltd., Singapore 189773 (SG)
(72) Inventor: Tong, Liang, 189773 Singapore (SG); Shu, Mingming, 189773 Singapore (SG); Huang, Wenda, 189773 Singapore (SG)
(74) Representative: Fish & Richardson P.C.

(57) **Abstract**

Embodiments of this specification provide a subscription authorization method, applied to a target client embedded with an SDK provided by a third party. The target client runs in an operating system provided by a serving party. The method includes: in response to a subscription application initiated by a user in the target client, activating, by the SDK, an intermediate page provided by the third party, where the subscription application is used to apply for authorization to bind a first account of the user in a target electronic wallet to a second account of the user in the serving party; initiating, by the intermediate page, a subscription request to a system server corresponding to the serving party by using an intermediate server corresponding to the third party, to obtain a subscription request number; and further, initiating, by the intermediate page to a wallet client of the target electronic wallet, a first request carrying the subscription request number, so that the wallet client initiates a binding request to the system server, and the binding request triggers the system server to interact with the wallet server of the target electronic wallet based on the subscription request number through forwarding by the intermediate server, to complete the binding.

## Description

### TECHNICAL FIELD

One or more embodiments of this specification relate to the field of computer technologies, and in particular, to a subscription authorization method and apparatus, a storage medium, and a computer system.

### BACKGROUND

In an Internet scenario, a user uses services provided by various service platforms, and usually needs to use an electronic wallet for payment. In this case, the service platform needs to obtain subscription authorization granted by the user to perform withholding by using the electronic wallet.

With the rise of electronic payment, there are more electronic wallets. It is expected that there is an improved solution, to improve convenience of subscription authorization between the service platform and the electronic wallet, and improve service experience of the user.

### SUMMARY

Embodiments of this specification describe a subscription authorization method and apparatus. A user is supported to initiate a "one-stop" binding on a target client, and there is no jump in a whole process, to bring a new improvement and breakthrough to user experience and performance of a withholding subscription product.

According to a first aspect, a subscription authorization method is provided, applied to a target client. The target client is embedded with an SDK provided by a third party, the target client runs in an operating system provided by a serving party, and the method includes: in response to a subscription application initiated by a user in the target client, activating, by the SDK, an intermediate page provided by the third party, where the subscription application is used to apply for authorization to bind a first account of the user in a target electronic wallet to a second account of the user in the serving party; initiating, by the intermediate page, a subscription request to a system server corresponding to the serving party by using an intermediate server corresponding to the third party, to obtain a subscription request number corresponding to the subscription application; and initiating, by the intermediate page, a first request to a wallet client of the target electronic wallet, where the first request carries the subscription request number, so that the wallet client initiates a binding request to the system server, and the binding request triggers the system server to interact with the wallet server of the target electronic wallet based on the subscription request number through forwarding by the intermediate server, to complete the binding.

According to a second aspect, a subscription authorization method is provided, is applied to an intermediate server corresponding to a third party, and includes: receiving a subscription request from an intermediate page provided by the third party, where the intermediate page is activated, by an SDK embedded in a target client, in response to a subscription application initiated by a user, the target client runs in an operating system provided by a serving party, the SDK is provided by the third party, and the subscription application is used to apply for authorization to bind a first account of the user in a target electronic wallet to a second account of the user in the serving party; forwarding the subscription request to a system server corresponding to the serving party, and providing the intermediate page with a subscription request number that corresponds to the subscription application and that is returned by the system server; and performing forwarding between the system server and a wallet server of the target electronic wallet in response to that the system server is triggered by a binding request, so that the system server interacts with the wallet server, to complete the binding, where the binding request derives from a first request initiated by the intermediate page, and the first request carries the subscription request number.

According to a third aspect, a subscription authorization method is provided, is applied to a system server corresponding to a serving party, and includes: receiving a subscription request forwarded by an intermediate server corresponding to a third party, where the subscription request is initiated by an intermediate page provided by the third party, the intermediate page is activated, by an SDK embedded in a target client, in response to a subscription application initiated by a user, the target client runs in an operating system provided by the serving party, the SDK is provided by the third party, and the subscription application is used to apply for authorization to bind a first account of the user in a target electronic wallet to a second account of the user in the serving party; sending a generated subscription request number corresponding to the subscription application to the intermediate server, so that the intermediate server provides the subscription request number to the intermediate page; receiving, from a wallet client of the target electronic wallet, a binding request sent by the wallet client under triggering of the intermediate page; and interacting, based on the subscription request number carried in the binding request, with the wallet server through forwarding by the intermediate server, to complete the binding.

According to a fourth aspect, a computer system is provided, and includes a memory, a processor, and a computer program that is stored in the memory and that is capable of running on the processor. The processor is integrated into a target client, the target client is embedded with an SDK provided by a third party, the target client runs in an operating system provided by a serving party, and when the processor executes the program, the following steps are implemented: in response to a subscription application initiated by a user in the target client, activating, by the SDK, an intermediate page provided by the third party, where the subscription application is used to apply for authorization to bind a first account of the user in a target electronic wallet to a second account of the user in the serving party; initiating, by the intermediate page, a subscription request to a system server corresponding to the serving party by using an intermediate server corresponding to the third party, to obtain a subscription request number corresponding to the subscription application; and initiating, by the intermediate page, a first request to a wallet client of the target electronic wallet, where the first request carries the subscription request number, so that the wallet client initiates a binding request to the system server, and the binding request triggers the system server to interact with the wallet server of the target electronic wallet based on the subscription request number through forwarding by the intermediate server, to complete the binding.

According to a fifth aspect, a computer system is provided, and includes a memory, a processor, and a computer program that is stored in the memory and that is capable of running on the processor. The processor is integrated into an intermediate server corresponding to a third party, and when the processor executes the program, the following steps are implemented: receiving a subscription request from an intermediate page provided by the third party, where the intermediate page is activated, by an SDK embedded in a target client, in response to a subscription application initiated by a user, the target client runs in an operating system provided by a serving party, the SDK is provided by the third party, and the subscription application is used to apply for authorization to bind a first account of the user in a target electronic wallet to a second account of the user in the serving party; forwarding the subscription request to a system server corresponding to the serving party, and providing the intermediate page with a subscription request number that corresponds to the subscription application and that is returned by the system server; and performing forwarding between the system server and a wallet server of the target electronic wallet in response to that the system server is triggered by a binding request, so that the system server interacts with the wallet server, to complete the binding, where the binding request derives from a first request initiated by the intermediate page, and the first request carries the subscription request number.

According to a sixth aspect, a computer system is provided, and includes a memory, a processor, and a computer program that is stored in the memory and that is capable of running on the processor. The processor is integrated into a system server corresponding to a serving party, and when the processor executes the program, the following steps are implemented: receiving a subscription request forwarded by an intermediate server corresponding to a third party, where the subscription request is initiated by an intermediate page provided by the third party, the intermediate page is activated, by an SDK embedded in a target client, in response to a subscription application initiated by a user, the target client runs in an operating system provided by the serving party, the SDK is provided by the third party, and the subscription application is used to apply for authorization to bind a first account of the user in a target electronic wallet to a second account of the user in the serving party; sending a generated subscription request number corresponding to the subscription application to the intermediate server, so that the intermediate server provides the subscription request number to the intermediate page; receiving, from a wallet client of the target electronic wallet, a binding request sent by the wallet client under triggering of the intermediate page; and interacting, based on the subscription request number carried in the binding request, with the wallet server through forwarding by the intermediate server, to complete the binding.

According to a seventh aspect, a subscription authorization apparatus is provided, and is integrated into a target client. The target client is embedded with an SDK provided by a third party, the target client runs in an operating system provided by a serving party, and the apparatus includes: an intermediate page activation module, configured to: in response to a subscription application initiated by a user in the target client, enable the SDK to activate an intermediate page provided by the third party, where the subscription application is used to apply for authorization to bind a first account of the user in a target electronic wallet to a second account of the user in the serving party; a request number obtaining module, configured to enable the intermediate page to initiate a subscription request to a system server corresponding to the serving party by using an intermediate server corresponding to the third party, to obtain a subscription request number corresponding to the subscription application; and a binding triggering module, configured to enable the intermediate page to initiate a first request to a wallet client of the target electronic wallet, where the first request carries the subscription request number, so that the wallet client initiates a binding request to the system server, and the binding request triggers the system server to interact with the wallet server of the target electronic wallet based on the subscription request number through forwarding by the intermediate server, to complete the binding.

According to an eighth aspect, a subscription authorization apparatus is provided, is integrated into an intermediate server corresponding to a third party, and includes: a subscription request receiving module, configured to receive a subscription request from an intermediate page provided by the third party, where the intermediate page is activated, by an SDK embedded in a target client, in response to a subscription application initiated by a user, the target client runs in an operating system provided by a serving party, the SDK is provided by the third party, and the subscription application is used to apply for authorization to bind a first account of the user in a target electronic wallet to a second account of the user in the serving party; a subscription request forwarding module, configured to: forward the subscription request to a system server corresponding to the serving party, and provide the intermediate page with a subscription request number that corresponds to the subscription application and that is returned by the system server; and a forwarding module, configured to perform forwarding between the system server and a wallet server of the target electronic wallet in response to that the system server is triggered by a binding request, so that the system server interacts with the wallet server, to complete the binding, where the binding request derives from a first request initiated by the intermediate page, and the first request carries the subscription request number.

According to a ninth aspect, a subscription authorization apparatus is provided, is integrated into a system server corresponding to a serving party, and includes: a subscription request receiving module, configured to receive a subscription request forwarded by an intermediate server corresponding to a third party, where the subscription request is initiated by an intermediate page provided by the third party, the intermediate page is activated, by an SDK embedded in a target client, in response to a subscription application initiated by a user, the target client runs in an operating system provided by the serving party, the SDK is provided by the third party, and the subscription application is used to apply for authorization to bind a first account of the user in a target electronic wallet to a second account of the user in the serving party; a request number sending module, configured to send a generated subscription request number corresponding to the subscription application to the intermediate server, so that the intermediate server provides the subscription request number to the intermediate page; a binding request receiving module, configured to receive, from a wallet client of the target electronic wallet, a binding request sent by the wallet client under triggering of the intermediate page; and a binding request processing module, configured to interact, based on the subscription request number carried in the binding request, with the wallet server through forwarding by the intermediate server, to complete the binding.

According to a tenth aspect, a computer-readable storage medium is provided. The computer-readable storage medium stores a computer program, and when the computer program is executed on a computer, the computer is enabled to perform the method in the first aspect, the second aspect, or the third aspect.

In conclusion, according to the method and the apparatus provided in the embodiments of this specification, the user is supported to initiate "one-stop" binding on the target client, and there is jump in a whole process, to bring a new improvement and breakthrough to user experience and performance of a withholding subscription product.

### BRIEF DESCRIPTION OF DRAWINGS

To describe the technical solutions in the embodiments of the present invention more clearly, the following briefly describes the accompanying drawings required for describing the embodiments. Apparently, the accompanying drawings in the following description show merely some embodiments of the present disclosure, and a person of ordinary skill in the art can still derive other drawings from these accompanying drawings without creative efforts.
FIG. 1 is a schematic diagram of a communication architecture used in a subscription authorization procedure according to an embodiment;
FIG. 2 is a schematic diagram of communication interaction steps of a subscription authorization procedure according to an embodiment;
FIG. 3 is a schematic diagram of an interface that includes an entry for triggering an intermediate page and that is displayed on a wallet client according to an embodiment;
FIG. 4 is a schematic diagram of an interface that includes an entry for triggering an intermediate page and that is displayed on a wallet client according to another embodiment;
FIG. 5 shows an activated and displayed intermediate page embedded in a wallet client according to an embodiment;
FIG. 6 shows a half-screen identity verification interface pulled up by a serving party in a wallet client according to an embodiment;
FIG. 7 is a schematic diagram of an interface that displays a subscription result on an intermediate page according to an embodiment;
FIG. 8 is a schematic diagram of an interface that displays a subscription result and a rights and interests collection entry on an intermediate page according to an embodiment;
FIG. 9 is a schematic diagram of interaction steps of adding pre-verification of a qualification of a user in a serving party based on FIG. 2;
FIG. 10 is a schematic diagram of interaction steps of adding, based on FIG. 2 or FIG. 9, authorization granted by a user on a wallet side;
FIG. 11 is a schematic diagram of performing sub-steps of step S211 in FIG. 2 according to an embodiment;
FIG. 12 is a schematic diagram of performing sub-steps of step S211 in FIG. 2 according to another embodiment;
FIG. 13 is a schematic diagram of a communication architecture used in a subscription authorization procedure according to another embodiment;
FIG. 14 is a schematic diagram of communication interaction steps of a subscription authorization procedure according to another embodiment;
FIG. 15 is a schematic diagram of a functional structure of a subscription authorization apparatus integrated into a target client according to an embodiment of this specification;
FIG. 16 is a schematic diagram of a functional structure of a subscription authorization apparatus integrated into an intermediate server corresponding to a third party according to an embodiment of this specification;
FIG. 17 is a schematic diagram of a functional structure of a subscription authorization apparatus integrated into a system server corresponding to a serving party according to an embodiment of this specification; and
FIG. 18 is a schematic structural diagram of a computer system according to an embodiment of this specification.

### DESCRIPTION OF EMBODIMENTS

The following describes the solutions provided in this specification with reference to the accompanying drawings.

As mentioned above, a service platform needs to obtain subscription authorization granted by a user to perform withholding by using an electronic wallet. It can be understood that "withholding" is "payment by agreement" or "payment through user authorization", and "subscription" is granting user authorization on a payment channel side, adding a payment method, and agreeing that a service platform or a merchant performs payment by agreement in the payment method.

Currently, a withholding subscription can be initiated only on a merchant side. After the user adds a wallet on a merchant end and uses the wallet as a payment by agreement manner, a jump needs to be made from the merchant end to a wallet side for subscription authorization confirmation. After authorization is completed, a jump is made to the merchant side to finally complete addition of the new payment method. At least two switches and jumps are made in an entire subscription procedure, a link is long and not smooth, and user experience is poor. When a network condition is unstable, a subscription process may be forcibly interrupted due to a network collapse or a delay and freezing, to greatly reduce user experience and cause a user loss.

In addition, for an acquisition and marketing activity usually accompanying a withholding subscription scenario, a procedure is split due to frequent switches. After completing binding of the payment method on the merchant side, the user needs to return to the wallet side to search for and receive a gift voucher and perform redemption in a next step. A closed loop cannot be completed on the wallet side. Consequently, user experience is poor, and an overall conversion rate of payment by a new customer is affected.

Based on the above-mentioned observation and analysis, the applicant proposes a withholding subscription solution, to support the user to initiate "one-stop" binding on the payment channel side or an electronic wallet side. There is no jump in a whole process, and a "habitual" mode in which binding is initiated on the merchant side in a conventional withholding subscription product is broken, to bring a new improvement and breakthrough to user experience and performance of the withholding subscription product.

In the withholding subscription solution, in addition to the wallet side and the merchant side (or referred to as a serving party side), a third party is introduced. A standard intermediate page provided by the third party can be separately embedded in different wallet ends, and a request is sent to a serving party through a unified interface. A server of the third party is connected to a server of the serving party, and a wallet does not need to be independently integrated with a merchant.

In addition, the solution is implemented based on an underlying communication capability of an operating system developed by the serving party. Specifically, the wallet end runs in the operating system developed by the serving party, and is integrated with a capability set of a payment method (payment type) binding function developed by the serving party, so that a binding request is initiated to the server corresponding to the serving party in the operating system in a running process, to reduce frequent jumps in the subscription process, so that the entire subscription procedure is completed in a "one-stop" manner on the wallet end. It should be understood that the capability set and the functional module belong to the same development framework.

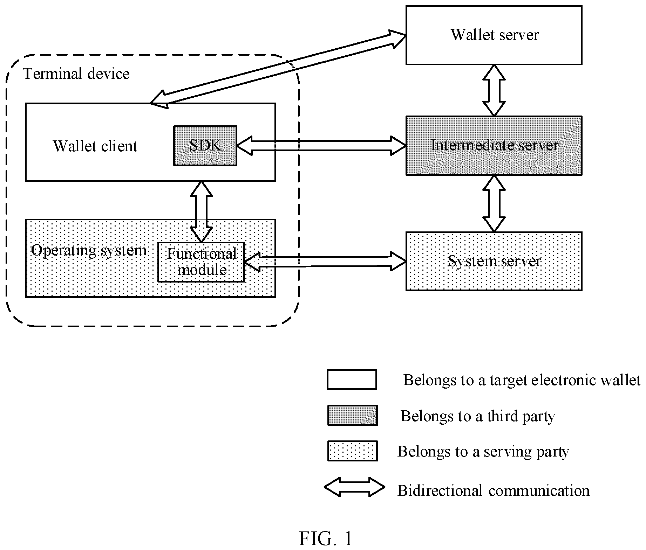

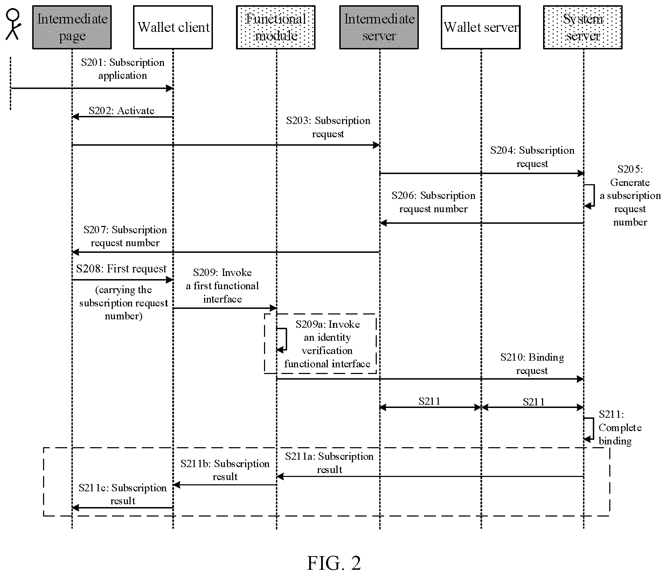

Next, a communication interaction entity used in the withholding subscription solution is first described with reference to FIG. 1, and then a procedure interaction step used in the withholding subscription solution is described with reference to FIG. 2.

FIG. 1 is a schematic diagram of a communication architecture used in a subscription authorization procedure according to an embodiment of this specification. Entities that schematically participate in communication include a wallet client and a wallet server that correspond to a target electronic wallet (which can be any electronic wallet), a functional module that supports an intra-application purchase and that is provided by a serving party, a system server corresponding to the serving party, an intermediate page provided by a third party, and an intermediate server corresponding to the third party.

First, it should be understood that a first account of a user in the target electronic wallet is bound to a second account of the user in the serving party through subscription authorization. In addition, "first" in "first account", "second" in "second account", and a similar term in another place in this specification are used to distinguish between similar things, and do not have another limitation function such as sorting.

Further, to facilitate understanding, the following first describes an actual withholding scenario after subscription authorization succeeds, and then, an association relationship between communication entities of different parties is described based on this.

In the actual withholding scenario, the user purchases a product or a service in a merchant application on a terminal device (for example, a smartphone or a tablet computer). On the terminal device, an operating system developed by the serving party is installed, and a second account of the user in the serving party is logged in to. The merchant application is an application in an ecosystem of the serving party, and is developed based on the functional module that supports the intra-application purchase and that is provided by the serving party. In this case, the merchant application can perform withholding by using the first account, in the target electronic wallet, that is bound to the second account of the user. Withholding is referred to as deduction by agreement or payment through user authorization.

Before actual withholding, subscription authorization needs to be performed. The following association relationship exists between communication entities participating in subscription authorization (referring to FIG. 1):
1. Association relationship between communication entities of different parties
   (1) Association relationship between the target electronic wallet and the serving party: The wallet client runs in the operating system provided by the serving party, the functional module is installed in the operating system, and the wallet client implements, by invoking a functional interface of the functional module, communication with the system server corresponding to the serving party.
   (2) Association relationship between the target electronic wallet and the third party: The wallet client is integrated with a software development kit (SDK for short) provided by the third party, to be embedded with the intermediate page provided by the third party.
   (3) Association relationship among the target electronic wallet, the serving party, and the third party: The intermediate server corresponding to the third party performs forwarding for communication between the wallet serving party and the system server corresponding to the serving party.
2. Association relationship between communication entities of the same party

Communication entities such as the target electronic wallet, the serving party, or the third party of the same party can directly communicate with each other.

A communication entity used in the subscription authorization procedure is described above with reference to FIG. 1. The following describes interaction steps between communication entities in the subscription authorization procedure. For details, references can be made to the following interaction steps shown in FIG. 2.

Step S201: A wallet client receives a subscription application initiated by a user, where the subscription application is used to apply for authorization to bind a first account of the user in a target electronic wallet to a second account of the user in the serving party.

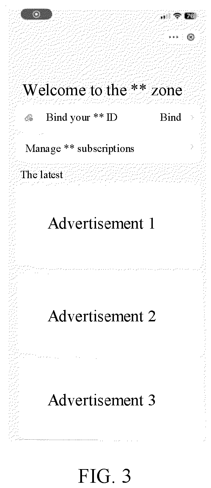

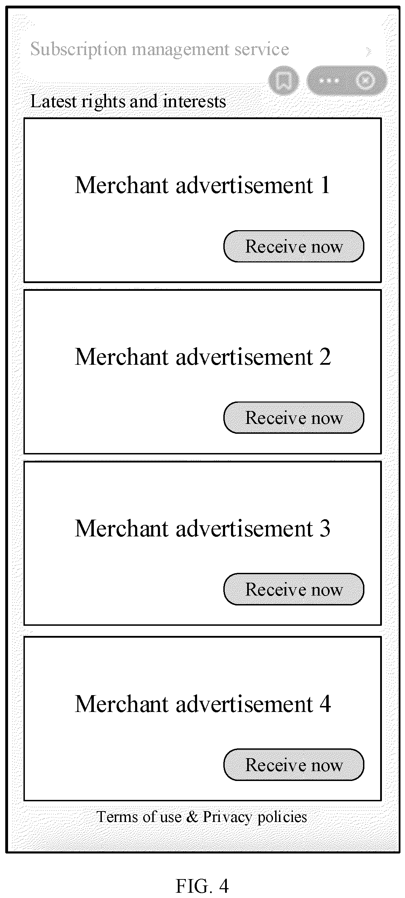

It should be understood that, the wallet client can place, based on a requirement, an entry to a withholding subscription product in an interface of the wallet client, for example, a "Bind" icon shown in FIG. 3 and any "Receive now" icon shown in FIG. 4. Therefore, the wallet client can receive a subscription application operation (or briefly referred to as a subscription application) initiated by the user by tapping the entry icon in the interface.

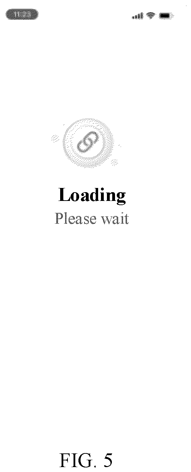

Step S202: An SDK embedded in the wallet client activates, in response to the subscription application, an intermediate page provided by a third party. For example, FIG. 5 shows an activated and displayed intermediate page in the wallet client.

Step S203: The intermediate page initiates a subscription request to an intermediate server.

In an embodiment, the subscription request can include a wallet account identifier. The wallet account identifier is specifically an identifier of a current login account (or referred to as a first account) of the user in the target electronic wallet, can be in a form of a string of digits, an email address, a mobile phone number, or a user name, or a unique identification code in any other form, and is used to identify a specific wallet account in a wallet application.

In another embodiment, the subscription request can further include a country code, for example, a telephone area code or a country letter code.

In still another embodiment, the subscription request can further include a name of an electronic wallet.

It should be understood that the intermediate page can automatically initiate the subscription request after being activated. In addition, content such as the wallet account identifier included in the subscription request can be obtained by the intermediate page by initiating an invocation request to the wallet client through a related application programming interface (API for short) included in the SDK.

Step S204: The intermediate server forwards the subscription request to a system server.

Step S205: The system server generates a subscription request number corresponding to the subscription application and the subscription request.

For example, the system server can perform hash processing on content in the subscription request and a current timestamp, to obtain the subscription request number.

It should be understood that the system server can further store valid information and the subscription request number in the subscription request in association, to facilitate subsequent procedure processing.

Step S206: The intermediate server receives the subscription request number from the system server.

Step S207: The intermediate page receives the subscription request number from the intermediate server.

Step S208: The intermediate page initiates a first request to the wallet client, where the first request carries the subscription request number.

It should be understood that the intermediate page can initiate the first request to a client based on the received subscription request number through a first API included in the SDK. For example, the first API is a JSAPI, namely, a JavaScript application programming interface.

Step S209: The wallet client invokes a first functional interface of the functional module in an operating system when the first request is triggered, to trigger the functional module to initiate a binding request to the system server in step S210.

In an embodiment, an interaction step S209a can be further included between step S209 and step S210. The functional module initiates an identity verification request (or referred to as an identity verification request) to the system server by invoking an identity verification functional interface of the functional module, to perform step S210 when identity verification succeeds.

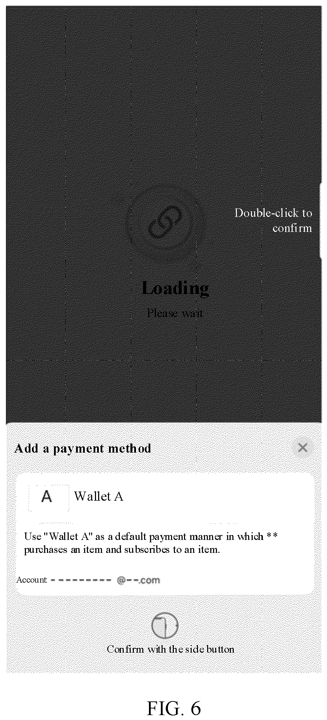

It can be understood that, after the functional module initiates the identity verification request to the system server, the system server delivers, to the wallet client, an identity verification interface provided by the serving party, to perform identity verification on the user based on information entered by the user based on the identity verification interface, and return an identity verification result to the functional module. For example, for the identity verification interface, references can be made to a half-screen identity verification interface that is displayed based on the intermediate page and that is pulled up by the serving party as shown in FIG. 6. In addition, if the identity verification result indicates that identity verification fails, a current subscription procedure is ended.

Step S211: The system server interacts with a wallet server of the target electronic wallet based on the subscription request number in the binding request through forwarding by the intermediate server, to complete binding indicated by the subscription application.

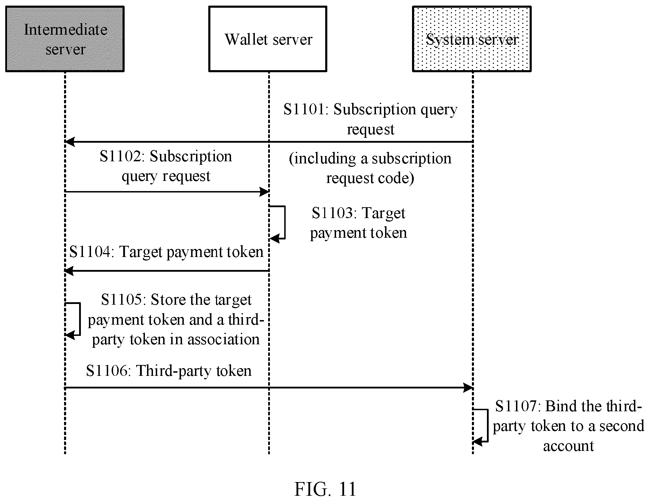

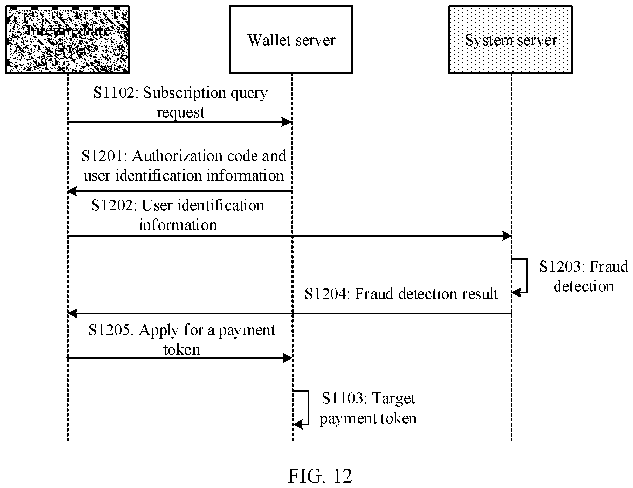

It should be understood that, when the serving party and a wallet party are directly connected without using the third party conventionally, the system server and the wallet server can directly interact with each other, to complete binding of accounts. In this step, the intermediate server performs forwarding. Therefore, a person skilled in the art can design a proper implementation of this step. In addition, a creative implementation disclosed in this step in this embodiment of this specification is described below with reference to FIG. 11 and FIG. 12.

In an embodiment, after step S211, the interaction steps further include: step S211a: The system server returns a subscription result corresponding to the subscription application to the functional module. Step S211b: The functional module provides the subscription result to the wallet client. Step S211c: The wallet client provides the subscription result to the intermediate page.

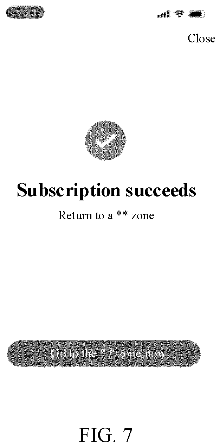

Further, in a specific embodiment, after step S211c, the method can further include a step in which the intermediate page displays the subscription result. In an example, references can be made to FIG. 7. The shown subscription result is "Subscription succeeds".

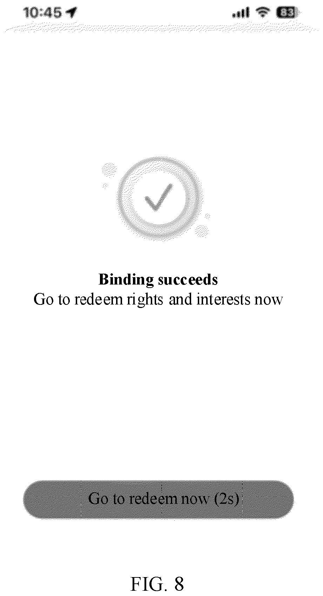

In a more specific embodiment, an interface that supports the user to initiate the subscription application includes an advertisement for receiving merchant rights and interests. For this, references can be made to FIG. 4. Correspondingly, after subscription is completed, the intermediate page further displays an entry for receiving rights and interests, so that both a subscription operation and receiving of rights and interests can be completed in a closed loop on a wallet end, to bring smooth operation experience to the user. For example, as shown in FIG. 8, in addition to that the subscription result is "Binding succeeds", an entry for receiving the merchant rights and interests, namely, an icon "Go to redeem rights and interests now" is further displayed. Therefore, the user can receive, by tapping the icon, rights and interests of a user who participates in a withholding subscription activity.

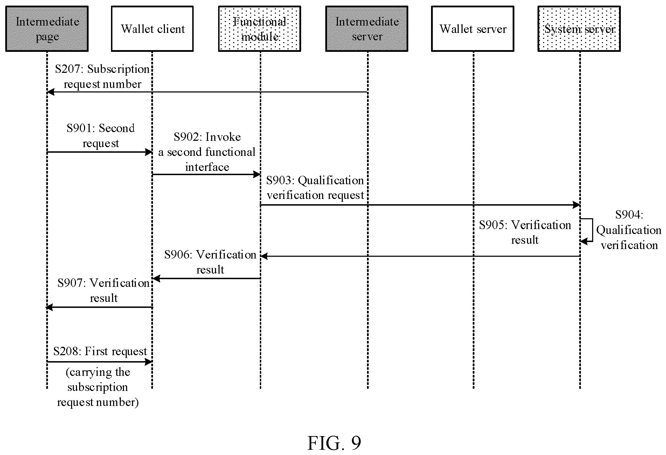

The interaction steps of the subscription authorization procedure shown in FIG. 2 are described above. The applicant proposes that a further improvement can be further made to the subscription procedure shown in FIG. 2. The following provides descriptions with reference to FIG. 9 to FIG. 12.

Improvement 1: Pre-verification of a qualification of the user in the serving party is added.

Before the intermediate page triggers the wallet client to initiate the binding request to the system server, the intermediate page triggers the wallet client to communicate with the functional module, to determine whether the user has, on a serving party side, a capability of using the withholding subscription product. It should be understood that some users may be rejected due to incomplete account information or a poor transaction record on the serving party side. In this way, the subscription authorization procedure can be optimized, to improve efficiency, reduce time costs of the user, and further optimize user experience.

Specifically, FIG. 9 shows interaction steps of implementing pre-verification. It should be noted that the interaction steps shown in FIG. 9 are additionally added based on FIG. 2. Specifically, after step S207 and before step S208 in FIG. 2, the following interaction steps can be further performed.

Step S901: The intermediate page initiates a second request to the wallet client, to trigger the wallet client to perform step S902 to invoke a second functional interface of the functional module.

It should be understood that the intermediate page can initiate the second request by using the SDK embedded in the wallet client, the second request carries the subscription request number, and the subscription request number is introduced when the wallet client invokes the second functional interface.

Step S903: The functional module initiates a qualification verification request to the system server after the second functional interface of the functional module is invoked.

It should be understood that the qualification verification request includes the subscription request number, and can further carry a second account identifier of the user in the serving party. Usually, the user logs in to an account of the user in the serving party when using the operating system provided by the serving party, to use various services provided by the serving party. Therefore, the functional module in the operating system obtains the second account identifier of the user through local invocation.

Step S904: The system server verifies the qualification of the user in the serving party based on the qualification verification request.

For example, the system server can verify the qualification of the user based on the second account identifier in the qualification verification request, for example, verify whether account information is complete or whether user credit satisfies a standard.

Step S905: The functional module receives a verification result returned by the system server.

Step S906: The system server provides the verification result to the wallet client.

Step S907: The wallet client provides the verification result to the intermediate page.

Interaction steps added after pre-verification in the serving party is introduced are described above. In addition, it should be understood that a triggering condition of step S208 changes correspondingly after pre-verification in the serving party is introduced. A change is that the intermediate page initiates the first request when the verification result indicates that verification succeeds. If verification fails, the intermediate page does not initiate the first request.

Improvement 2: Authorization performed by the user on a wallet side is added.

It should be understood that, before the user initiates the subscription application, a login state of the user on the wallet client can reflect validity of an identity of the user to a certain extent. In addition, that the user initiates the subscription application initially indicates an authorization intention of the user on the wallet side and the serving party side. Authorization performed by the user on the wallet side is added, and a hyperlink of agreement items and terms is provided on an authorization page for review by the user, to further guarantee rights and interests of the user.

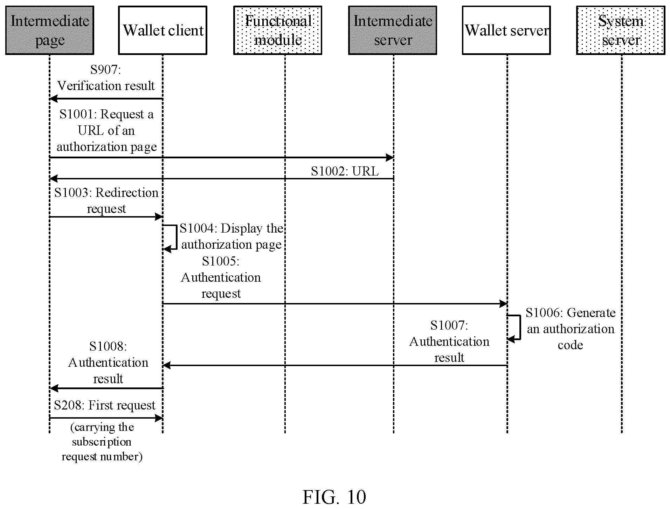

Specifically, FIG. 10 shows interaction steps of implementing authorization granted by a user on a wallet side. It should be noted that the interaction steps shown in FIG. 10 can be additionally added based on FIG. 2 or FIG. 9. Specifically, after step S207 in FIG. 2 or step S907 in FIG. 9, and before step S208, the following interaction steps can be further included.

Step S1001: The intermediate page requests a uniform resource locator (URL) of the authorization page from the intermediate server, where the authorization page corresponds to a page guiding the user to authorize the target electronic wallet.

It should be understood that, when step S1001 is performed after step S207 in FIG. 2, a triggering condition of step S1001 is that the intermediate page obtains the subscription request number. When step S1001 is performed after step S907 in FIG. 9, a triggering condition of step S1001 is that the verification result received by the intermediate page indicates that verification succeeds.

Step S1002: The intermediate page receives the URL of the authorization page from the intermediate server.

Step S1003: The intermediate page initiates a redirection request to the wallet client based on the URL.

Step S1004: The wallet client displays the authorization page.

Step S1005: The wallet client initiates an authentication request to the wallet server based on an authorization acknowledgment operation triggered by the user based on the authorization page. For example, the authorization acknowledgment operation can be a check operation performed on "Have read agreement items and terms" on the authorization page and a tap operation performed on an acknowledgment icon.

Step S1006: The wallet server processes the authentication request, to obtain an authentication result, and generates an authorization code when authentication succeeds.

Step S1007: The wallet client receives the authentication result from the wallet server.

Step S1008: The intermediate page receives the authentication result from the wallet client.

Interaction steps added when authorization performed by the user on the wallet side is introduced are described above. In addition, it should be understood that, in this case, the triggering condition of step S208 performed after step S1008 changes correspondingly. When the authentication result indicates that authentication succeeds, the intermediate page initiates the first request. If authentication fails, the intermediate page does not initiate the first request.

Improvement 3: A creative implementation of step S211 is designed.

As described above, step S211 shown in FIG. 2 includes: The system server interacts with the wallet server through forwarding by the intermediate server, to complete binding indicated by the subscription application. In view of this, this embodiment of this specification proposes that step S211 is specifically implemented as sub-steps S1101 to S1107 shown in FIG. 11.

Step S1101: The system server sends a subscription query request to the intermediate server based on the binding request, where the subscription query request carries the subscription request number.

In an embodiment, the binding request further includes device information, of a device running in the operating system, that is obtained by the functional module. In this case, when verifying, based on the device information, that the device is valid, the system server sends the subscription query request to the intermediate server; or otherwise, a current procedure is ended.

In another embodiment, the subscription query request further includes a first account identifier, and the first account identifier is introduced when the wallet client invokes the second functional interface of the functional module, so that the first account identifier is included in the binding request.

Step S1102: The intermediate server forwards the subscription query request to the wallet server.

Step S 1103: The wallet server generates a target payment token for the first account of the user on the wallet side.

In an embodiment, the wallet client generates the target payment token based on the subscription request number in the subscription query request, and stores the target payment token and the first account identifier in the subscription query request in association.

In an embodiment, the target payment token includes an access token and a refresh token. The refresh token is used to obtain anew access token after the access token expires, without requiring the user to log in again for authentication.

Step S1104: The wallet server provides the target payment token to the intermediate server.

Step S1105: The intermediate server stores the target payment token and a locally generated third-party token in association.

Step S1106: The intermediate server sends the third-party token to the system server.

Step S1107: The system server binds the third-party token to the second account. In this way, the third-party token is bound to the second account, to essentially implement binding of the first account to the second account.

It should be noted that, steps S1105, S1106, and S 1107 can be actually replaced by that the intermediate server sends the target payment token to the system server, and the system server binds the target payment token to the second account.

A creative execution manner designed for step S211 is described above.

Improvement 4: A creative implementation of step S211 is designed based on Improvement 2 and Improvement 3.

In Improvement 2, authorization on a user side is added. The wallet client generates the authorization code in step S1006. Therefore, the authorization code can be introduced into interaction in step S211, to improve security and accuracy of this solution. Specifically, this embodiment of this specification proposes to additionally add the following steps between step S1102 and step S1103 shown in FIG. 11.

Step S1201: The intermediate server receives an authorization code and user identification information that correspond to the subscription request number and that are returned by the wallet server.

For example, the user identification information can be an email address or a communication number.

Step S1202: The intermediate server provides the user identification information to the system server.

Step S1203: The system server performs fraud detection based on the user identification information.

It should be understood that in a whole procedure of subscription authorization, the system server can perform fraud detection on the user from different perspectives or in different manners at different stages, for example, perform fraud detection with a relatively small computation amount in a former interaction step, and perform fraud detection with a relatively large computation amount in later interaction step, to improve efficiency on the whole, and reduce a computation amount.

Step S1204: The intermediate server receives a fraud detection result from the system server.

Step S1205: When the fraud detection result is that detection succeeds, the intermediate server applies to the wallet server for a payment token based on the authorization code.

Another creative execution manner designed for step S211 is described above.

It should be noted that, the four improvements can be separately implemented based on FIG. 2, or can be implemented after being combined, provided that a flow of data conforms to logic.

In conclusion, according to the subscription authorization method disclosed in this embodiment of this specification, the user is supported to initiate "one-stop" binding on the wallet client. There is no jump in a whole process, and a "habitual" mode in which binding is initiated on the merchant side in a conventional withholding subscription product is broken, to bring a new improvement to smooth user operation experience.

According to an embodiment of another aspect, this specification further proposes another extension solution, to migrate a subscription authorization solution completed in a one-stop manner in a wallet client to a merchant application (or referred to as a merchant application client) in an ecosystem of a serving party for one-stop completion. The merchant application is developed based on a functional module that supports an intra-application purchase and that is provided by the serving party. Therefore, the merchant application supports a user to purchase a product or a service in the merchant application by using a second account of the user in the serving party.

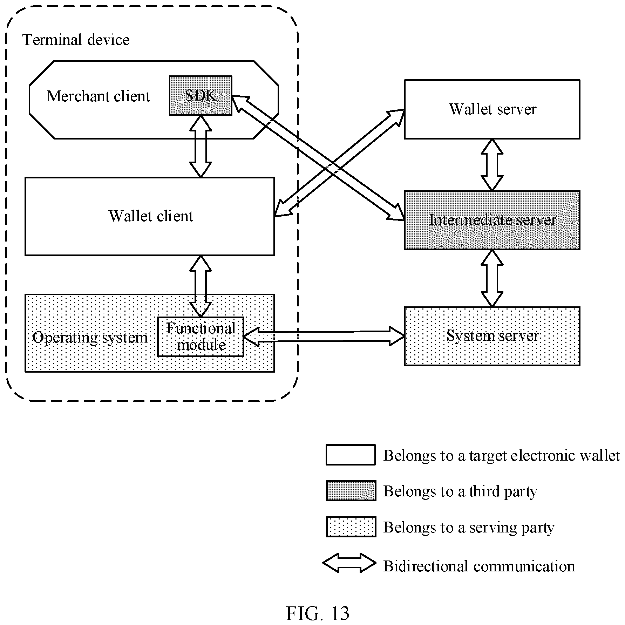

FIG. 13 is a schematic diagram of a communication architecture used in a subscription authorization procedure according to another embodiment. Entities that schematically participate in communication include a merchant application client, a wallet client and a wallet server that correspond to a target electronic wallet, a functional module that supports an intra-application purchase and that is provided by a serving party, a system server corresponding to the serving party, an intermediate page provided by a third party, and an intermediate server corresponding to the third party.

It can be found from a comparison between FIG. 13 and FIG. 1 that in FIG. 13, an SDK provided by the third party is integrated into the merchant application client, and an intermediate page that is of the SDK and that is embedded in the merchant application client communicates with an interface between a system server and a wallet end. In this way, an account of a user in the serving party and a newly added payment method can also be completed in the merchant application client.

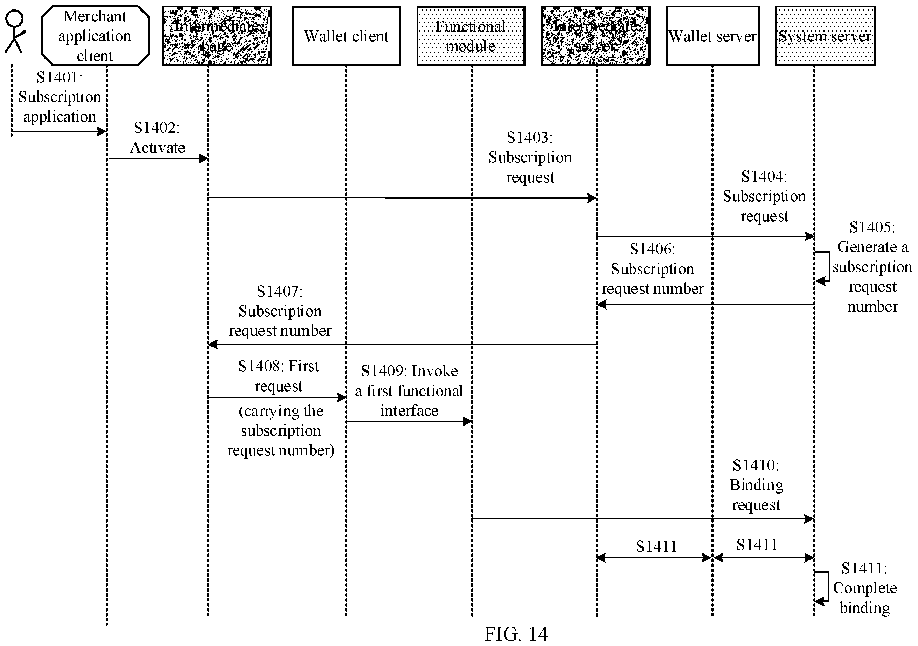

Specifically, FIG. 14 is a schematic diagram of communication interaction steps of a subscription authorization procedure according to another embodiment. The communication interaction steps include the following interaction steps S1401 to S1408.

Step S1401: A merchant application client receives a subscription application initiated by a user, where the subscription application is used to apply for authorization to bind a first account of the user in a target electronic wallet to a second account of the user in the serving party.

Step S1402: An SDK activates, in response to the subscription application, an intermediate page provided by a third party.

Step S1403: The intermediate page initiates a subscription request to an intermediate server.

Step S1404: The intermediate server forwards the subscription request to a system server.

Step S1405: The system server generates a subscription request number corresponding to the subscription application.

Step S1406: The intermediate server receives the subscription request number from the system server.

Step S1407: The intermediate page receives the subscription request number from the intermediate server.

Step S1408: The intermediate page initiates a first request to a wallet client, where the first request carries the subscription request number.

Step S1409: The wallet client invokes a first functional interface of the functional module in an operating system based on the first request, to trigger the functional module to initiate a binding request to the system server in step S1410.

Step S1411: The system server interacts with a wallet server of the target electronic wallet based on the subscription request number in the binding request through forwarding by the intermediate server, to complete binding indicated by the subscription application.

It can be learned from a comparison between the interaction steps in FIG. 14 and the interaction steps shown in FIG. 2 that a main difference between the interaction steps in FIG. 14 and the interaction steps shown in FIG. 2 lies in the first steps, namely, step S1401 and step S201. In one step, the subscription application is received by the wallet client, and in another step, the subscription application is received by the merchant application client. For brief description, a client that receives the subscription application is collectively referred to as a target client in this specification. In addition, in FIG. 14, the intermediate page initiates a request to the wallet client through an API in the SDK, and this belongs to cross-application invocation, and is different from intra-application inter-page invocation in FIG. 2.

It should be noted that, for description of the interaction steps shown in FIG. 14, references can be made to the description of the interaction steps shown in FIG. 2. In addition, the four improvements can also be implemented based on FIG. 14. It should be noted that Improvement 2, that is, that authorization performed by the user on a wallet side is added can be performed on the wallet client through a jump, or can be performed on the merchant application client. This mainly depends on a security requirement on the wallet side.

Corresponding to the subscription authorization method, this embodiment of this specification further provides a subscription authorization apparatus. Details are as follows:

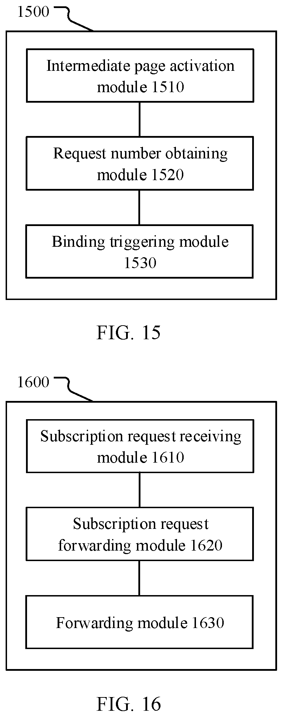

FIG. 15 is a schematic diagram of a functional structure of a subscription authorization apparatus integrated into a target client according to an embodiment of this specification. An SDK provided by a third party is embedded in the target client, and the target client runs in an operating system provided by a serving party. As shown in FIG. 15, the apparatus 1500 includes:
an intermediate page activation module 1510, configured to: in response to a subscription application initiated by a user in the target client, enable the SDK to activate an intermediate page provided by the third party, where the subscription application is used to apply for authorization to bind a first account of the user in a target electronic wallet to a second account of the user in the serving party; a request number obtaining module 1520, configured to enable the intermediate page to initiate a subscription request to a system server corresponding to the serving party by using an intermediate server corresponding to the third party, to obtain a subscription request number corresponding to the subscription application; and a binding triggering module 1530, configured to enable the intermediate page to initiate a first request to a wallet client of the target electronic wallet, where the first request carries the subscription request number, so that the wallet client initiates a binding request to the system server, and the binding request triggers the system server to interact with the wallet server of the target electronic wallet based on the subscription request number through forwarding by the intermediate server, to complete the binding.

In an embodiment, the target client is the wallet client, and the binding triggering module 1530 is specifically configured to initiate the first request to the wallet client through a first-type API included in the SDK, where the first-type API is used for intra-application inter-page invocation.

In an embodiment, the target client is a merchant application client in which an intra-application purchase is made based on the second account, and the binding triggering module 1530 is specifically configured to initiate the first request to the wallet client through a second-type API included in the SDK, where the second-type API is used for cross-application invocation.

In an embodiment, the operating system includes a functional module supporting an intra-application purchase, and all merchant applications in which an intra-application purchase is made based on the second account in the operating system are developed based on the functional module; and that the wallet client initiates the binding request to the system server includes: invoking, by the wallet client, a first functional interface of the functional module, so that the functional module initiates the binding request to the system server.

In an embodiment, the apparatus 1500 further includes a verification triggering module, configured to enable the intermediate page to initiate a second request to the wallet client, so that the wallet client invokes a second functional interface of the functional module, to trigger the system server to verify a qualification of the user in the serving party based on the subscription request number.

Further, in a specific embodiment, the apparatus 1500 further includes: a URL obtaining module, configured to enable the intermediate page to obtain a uniform resource locator (URL) from the intermediate server when the verification succeeds, where the URL corresponds to an authorization page guiding the user to authorize the target electronic wallet; and a redirection module, configured to enable the intermediate page to initiate a redirection request to the wallet client based on the URL, so that the wallet client displays the authorization page, initiates an authentication request to the wallet server based on an authorization confirmation operation triggered by the user based on the authorization page, and returns an authentication result to the intermediate page. The first request is generated when the authentication result indicates that authentication succeeds.

In an embodiment, the apparatus 1500 further includes a subscription result display module, configured to enable the intermediate page to obtain and display the subscription result.

FIG. 16 is a schematic diagram of a functional structure of a subscription authorization apparatus integrated into an intermediate server corresponding to a third party according to an embodiment of this specification. As shown in FIG. 16, the apparatus 1600 includes the following functional modules:
a subscription request receiving module 1610, configured to receive a subscription request from an intermediate page provided by the third party, where the intermediate page is activated, by an SDK embedded in a target client, in response to a subscription application initiated by a user, the target client runs in an operating system provided by a serving party, the SDK is provided by the third party, and the subscription application is used to apply for authorization to bind a first account of the user in a target electronic wallet to a second account of the user in the serving party; a subscription request forwarding module 1620, configured to: forward the subscription request to a system server corresponding to the serving party, and provide the intermediate page with a subscription request number that corresponds to the subscription application and that is returned by the system server; and a forwarding module 1630, configured to perform forwarding between the system server and a wallet server of the target electronic wallet in response to that the system server is triggered by a binding request, so that the system server interacts with the wallet server, to complete the binding, where the binding request derives from a first request initiated by the intermediate page, and the first request carries the subscription request number.

In an embodiment, the forwarding module 1630 is specifically configured to: obtain a target payment token for the first account from the wallet server based on the subscription request number provided by the system server, and store the target payment token and a locally generated third-party token in association; and send the third-party token to the system server, so that the system server binds the third-party token to the second account.

In a specific embodiment, that the forwarding module 1630 is specifically configured to obtain the target payment token for the first account from the wallet server based on the subscription request number provided by the system server includes:
sending a query request to the wallet server based on the subscription request number; receiving an authorization code and user identification information that correspond to the subscription request number and that are returned by the wallet server; providing the user identification information to the system server, so that the system server performs fraud detection based on the user identification information; and applying to the wallet server for a payment token based on the authorization code when the fraud detection succeeds.

Further, in an example, the apparatus 1600 further includes: a URL sending module, configured to: send a uniform resource locator (URL) to the intermediate page, so that the wallet client displays, based on the URL included in a redirection request initiated by the intermediate page, an authorization page that guides the user to authorize the target electronic wallet, and initiates an authentication request to the wallet server based on an authorization acknowledgment operation triggered by the user based on the authorization page, and further, the wallet server generates the authorization code when authentication succeeds, and stores, in association, the authorization code and the subscription request number carried in the authentication request. The first request is generated when the authentication succeeds.

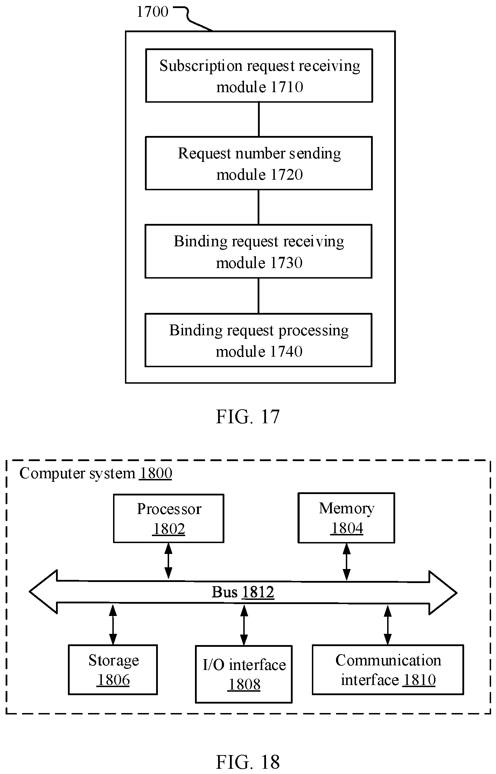

FIG. 17 is a schematic diagram of a functional structure of a subscription authorization apparatus integrated into a system server corresponding to a serving party according to an embodiment of this specification. As shown in FIG. 17, the apparatus 1700 includes:
a subscription request receiving module 1710, configured to receive a subscription request forwarded by an intermediate server corresponding to a third party, where the subscription request is initiated by an intermediate page provided by the third party, the intermediate page is activated, by an SDK embedded in a target client, in response to a subscription application initiated by a user, the target client runs in an operating system provided by the serving party, the SDK is provided by the third party, and the subscription application is used to apply for authorization to bind a first account of the user in a target electronic wallet to a second account of the user in the serving party; a request number sending module 1720, configured to send a generated subscription request number corresponding to the subscription application to the intermediate server, so that the intermediate server provides the subscription request number to the intermediate page; a binding request receiving module 1730, configured to receive, from a wallet client of the target electronic wallet, a binding request sent by the wallet client under triggering of the intermediate page; and a binding request processing module 1740, configured to interact, based on the subscription request number carried in the binding request, with the wallet server through forwarding by the intermediate server, to complete the binding.

In an embodiment, the apparatus 1700 further includes an identity verification module, configured to deliver, to the wallet client, an identity verification interface provided by the serving party, to perform identity verification on the user.

For ease of description, the above-mentioned apparatus is described by dividing the apparatus into various modules based on functions. Certainly, during implementation of this specification, functions of all modules can be implemented in one or more pieces of software and/or hardware.

The specification also provides a computer-readable non-transitory storage medium, where the storage medium stores a computer program, which, when executed by a processor, can be used to perform one or more steps of one or more methods described or illustrated herein or provides functionality described or illustrated herein. Herein, the computer-readable non-transitory storage medium or media may include one or more semiconductor-based or other integrated circuits (ICs) (such, as for example, field-programmable gate arrays (FPGAs) or application-specific ICs (ASICs)), hard disk drives (HDDs), hybrid hard drives (HHDs), optical discs, optical disc drives (ODDs), magneto-optical discs, magneto-optical drives, floppy diskettes, floppy disk drives (FDDs), magnetic tapes, solid-state drives (SSDs), RAM-drives, SECURE DIGITAL cards or drives, any other suitable computer-readable non-transitory storage media, or any suitable combination of two or more of these, where appropriate. A computer-readable non-transitory storage medium may be volatile, non-volatile, or a combination of volatile and non-volatile, where appropriate.

The specification also provides a computer system. FIG. 18 illustrates an example computer system 1800. In particular embodiments, one or more computer systems 1800 perform one or more steps of one or more methods described or illustrated herein. In particular embodiments, one or more computer systems 1800 provide functionality described or illustrated herein. In particular embodiments, software running on one or more computer systems 1800 performs one or more steps of one or more methods described or illustrated herein or provides functionality described or illustrated herein. Particular embodiments include one or more portions of one or more computer systems 1800. Herein, reference to a computer system may encompass a computing device, and vice versa, where appropriate. Moreover, reference to a computer system may encompass one or more computer systems, where appropriate.

This disclosure contemplates any suitable number of computer systems 1800. This disclosure contemplates computer system 1800 taking any suitable physical form. As example and not by way of limitation, computer system 1800 may be an embedded computer system, a system-on-chip (SOC), a single-board computer system (SBC) (such as, for example, a computer-on-module (COM) or system-on-module (SOM)), a desktop computer system, a laptop or notebook computer system, an interactive kiosk, a mainframe, a mesh of computer systems, a mobile telephone, a personal digital assistant (PDA), a server, a tablet computer system, or a combination of two or more of these. Where appropriate, computer system 1800 may include one or more computer systems 1800; be unitary or distributed; span multiple locations; span multiple machines; span multiple data centers; or reside in a cloud, which may include one or more cloud components in one or more networks. Where appropriate, one or more computer systems 1800 may perform without substantial spatial or temporal limitation one or more steps of one or more methods described or illustrated herein. As an example and not by way of limitation, one or more computer systems 1800 may perform in real time or in batch mode one or more steps of one or more methods described or illustrated herein. One or more computer systems 1800 may perform at different times or at different locations one or more steps of one or more methods described or illustrated herein, where appropriate.

In particular embodiments, computer system 1800 includes a processor 1802, memory 1804, storage 1806, an input/output (I/O) interface 1808, a communication interface 1810, and a bus 1812. Although this disclosure describes and illustrates a particular computer system having a particular number of particular components in a particular arrangement, this disclosure contemplates any suitable computer system having any suitable number of any suitable components in any suitable arrangement.

In particular embodiments, processor 1802 includes hardware for executing instructions, such as those making up a computer program. As an example and not by way of limitation, to execute instructions, processor 1802 may retrieve (or fetch) the instructions from an internal register, an internal cache, memory 1804, or storage 1806; decode and execute them; and then write one or more results to an internal register, an internal cache, memory 1804, or storage 1806. In particular embodiments, processor 1802 may include one or more internal caches for data, instructions, or addresses. This disclosure contemplates processor 1802 including any suitable number of any suitable internal caches, where appropriate. As an example and not by way of limitation, processor 1802 may include one or more instruction caches, one or more data caches, and one or more translation lookaside buffers (TLB s). Instructions in the instruction caches may be copies of instructions in memory 1804 or storage 1806, and the instruction caches may speed up retrieval of those instructions by processor 1802. Data in the data caches may be copies of data of 80 in memory 1804 or storage 1806 for instructions executing at processor 1802 to operate on; the results of previous instructions executed at processor 1802 for access by subsequent instructions executing at processor 1802 or for writing to memory 1804 or storage 1806; or other suitable data. The data caches may speed up read or write operations by processor 1802. The TLBs may speed up virtual-address translation for processor 1802. In particular embodiments, processor 1802 may include one or more internal registers for data, instructions, or addresses. This disclosure contemplates processor 1802 including any suitable number of any suitable internal registers, where appropriate. Where appropriate, processor 1802 may include one or more arithmetic logic units (ALUs); be a multi-core processor; or include one or more processors 1802. Although this disclosure describes and illustrates a particular processor, this disclosure contemplates any suitable processor.

In particular embodiments, memory 1804 includes main memory for storing instructions for processor 1802 to execute or data for processor 1802 to operate on. As an example and not by way of limitation, computer system 1800 may load instructions from storage 1806 or another source (such as, for example, another computer system 1800) to memory 1804. Processor 1802 may then load the instructions from memory 1804 to an internal register or internal cache. To execute the instructions, processor 1802 may retrieve the instructions from the internal register or internal cache and decode them. During or after execution of the instructions, processor 1802 may write one or more results (which may be intermediate or final results) to the internal register or internal cache. Processor 1802 may then write one or more of those results to memory 1804. In particular embodiments, processor 1802 executes only instructions in one or more internal registers or internal caches or in memory 1804 (as opposed to storage 1806 or elsewhere) and operates only on data in one or more internal registers or internal caches or in memory 1804 (as opposed to storage 1806 or elsewhere). One or more memory buses (which may each include an address bus and a data bus) may couple processor 1802 to memory 1804. Bus 1812 may include one or more memory buses, as described below. In particular embodiments, one or more memory management units (MMUs) reside between processor 1802 and memory 1804 and facilitate accesses to memory 1804 requested by processor 1802. In particular embodiments, memory 1804 includes random access memory (RAM). This RAM may be volatile memory, where appropriate. Where appropriate, this RAM may be dynamic RAM (DRAM) or static RAM (SRAM). Moreover, where appropriate, this RAM may be single-ported or multi-ported RAM. This disclosure contemplates any suitable RAM. Memory 1804 may include one or more memories 1804, where appropriate. Although this disclosure describes and illustrates particular memory, this disclosure contemplates any suitable memory.

In particular embodiments, storage 1806 includes mass storage for data or instructions. As an example and not by way of limitation, storage 1806 may include a hard disk drive (HDD), a floppy disk drive, flash memory, an optical disc, a magneto-optical disc, magnetic tape, or a Universal Serial Bus (USB) drive or a combination of two or more of these. Storage 1806 may include removable or non-removable (or fixed) media, where appropriate. Storage 1806 may be internal or external to computer system 1800, where appropriate. In particular embodiments, storage 1806 is non-volatile, solid-state memory. In particular embodiments, storage 1806 includes read-only memory (ROM). Where appropriate, this ROM may be mask-programmed ROM, programmable ROM (PROM), erasable PROM (EPROM), electrically erasable PROM (EEPROM), electrically alterable ROM (EAROM), or flash memory or a combination of two or more of these. This disclosure contemplates mass storage 1806 taking any suitable physical form. Storage 1806 may include one or more storage control units facilitating communication between processor 1802 and storage 1806, where appropriate. Where appropriate, storage 1806 may include one or more storages 1806. Although this disclosure describes and illustrates particular storage, this disclosure contemplates any suitable storage.

In particular embodiments, I/O interface 1808 includes hardware, software, or both, providing one or more interfaces for communication between computer system 1800 and one or more I/O devices. Computer system 1800 may include one or more of these I/O devices, where appropriate. One or more of these I/O devices may enable communication between a person and computer system 1800. As an example and not by way of limitation, an I/O device may include a keyboard, keypad, microphone, monitor, mouse, printer, scanner, speaker, still camera, stylus, tablet, touch screen, trackball, video camera, another suitable I/O device or a combination of two or more of these. An I/O device may include one or more sensors. This disclosure contemplates any suitable I/O devices and any suitable I/O interfaces 1808 for them. Where appropriate, I/O interface 1808 may include one or more device or software drivers enabling processor 1802 to drive one or more of these I/O devices. I/O interface 1808 may include one or more I/O interfaces 1808, where appropriate. Although this disclosure describes and illustrates a particular I/O interface, this disclosure contemplates any suitable I/O interface.

In particular embodiments, communication interface 1810 includes hardware, software, or both providing one or more interfaces for communication (such as, for example, packet-based communication) between computer system 1800 and one or more other computer systems 1800 or one or more networks. As an example and not by way of limitation, communication interface 1810 may include a network interface controller (NIC) or network adapter for communicating with an Ethernet or other wire-based network or a wireless NIC (WNIC) or wireless adapter for communicating with a wireless network, such as a WI-FI network. This disclosure contemplates any suitable network and any suitable communication interface 1810 for it. As an example and not by way of limitation, computer system 1800 may communicate with an ad hoc network, a personal area network (PAN), a local area network (LAN), a wide area network (WAN), a metropolitan area network (MAN), or one or more portions of the Internet or a combination of two or more of these. One or more portions of one or more of these networks may be wired or wireless. As an example, computer system 1800 may communicate with a wireless PAN (WPAN) (such as, for example, a BLUETOOTH WPAN), a WI-FI network, a WI-MAX network, a cellular telephone network (such as, for example, a Global System for Mobile Communications (GSM) network), or other suitable wireless network or a combination of two or more of these. Computer system 1800 may include any suitable communication interface 1810 for any of these networks, where appropriate. Communication interface 1810 may include one or more communication interfaces 1810, where appropriate. Although this disclosure describes and illustrates a particular communication interface, this disclosure contemplates any suitable communication interface.

In particular embodiments, bus 1812 includes hardware, software, or both coupling components of computer system 1800 to each other. As an example and not by way of limitation, bus 1812 may include an Accelerated Graphics Port (AGP) or other graphics bus, an Enhanced Industry Standard Architecture (EISA) bus, a front-side bus (FSB), a HYPERTRANSPORT (HT) interconnect, an Industry Standard Architecture (ISA) bus, an INFINIBAND interconnect, a low-pin-count (LPC) bus, a memory bus, a Micro Channel Architecture (MCA) bus, a Peripheral Component Interconnect (PCI) bus, a PCI-Express (PCIe) bus, a serial advanced technology attachment (SATA) bus, a Video Electronics Standards Association local (VLB) bus, or another suitable bus or a combination of two or more of these. Bus 1812 may include one or more buses 1812, where appropriate. Although this disclosure describes and illustrates a particular bus, this disclosure contemplates any suitable bus or interconnect.

A person skilled in the art should be aware that in the above-mentioned one or more examples, functions described in this application can be implemented by hardware, software, firmware, or any combination thereof. When the functions are implemented by software, the above-mentioned functions can be stored in a computer-readable medium or transmitted as one or more instructions or code in the computer-readable medium.

In the above-mentioned specific implementations, the objectives, technical solutions, and beneficial effects of the present invention are further described in detail. It should be understood that the above-mentioned descriptions are merely specific implementations of the present invention, but are not intended to limit the protection scope of the present invention. Any modification, equivalent replacement, improvement, or the like made based on the technical solutions of the present invention shall fall within the protection scope of the present invention.

### EXAMPLES

1. A subscription authorization method, applied to a target client, wherein the target client is embedded with an SDK provided by a third party, the target client runs in an operating system provided by a serving party, and the method comprises:
   in response to a subscription application initiated by a user in the target client, activating, by the SDK, an intermediate page provided by the third party, wherein the subscription application is used to apply for authorization to bind a first account of the user in a target electronic wallet to a second account of the user in the serving party;
   initiating, by the intermediate page, a subscription request to a system server corresponding to the serving party by using an intermediate server corresponding to the third party, to obtain a subscription request number corresponding to the subscription application; and
   initiating, by the intermediate page, a first request to a wallet client of the target electronic wallet, wherein the first request carries the subscription request number, so that the wallet client initiates a binding request to the system server, and the binding request triggers the system server to interact with the wallet server of the target electronic wallet based on the subscription request number through forwarding by the intermediate server, to complete the binding.
2. The method according to example 1, wherein the target client is the wallet client, and the initiating, by the intermediate page, a first request to a wallet client of the target electronic wallet comprises:
   initiating the first request to the wallet client through a first-type API comprised in the SDK, wherein the first-type API is used for intra-application inter-page invocation.
3. The method according to example 1, wherein the target client is a merchant application client in which an intra-application purchase is made based on the second account, and the initiating, by the intermediate page, a first request to a wallet client of the target electronic wallet comprises:
   initiating the first request to the wallet client through a second-type API comprised in the SDK, wherein the second-type API is used for cross-application invocation.
4. The method according to example 1, wherein the operating system comprises a functional module supporting an intra-application purchase, and all merchant applications in which an intra-application purchase is made based on the second account in the operating system are developed based on the functional module; and
   that the wallet client initiates the binding request to the system server comprises:
   invoking, by the wallet client, a first functional interface of the functional module, so that the functional module initiates the binding request to the system server.
5. The method according to example 4, wherein before the initiating, by the intermediate page, a first request to a wallet client of the target electronic wallet, the method further comprises:
   initiating, by the intermediate page, a second request to the wallet client, so that the wallet client invokes a second functional interface of the functional module, to trigger the system server to verify a qualification of the user in the serving party based on the subscription request number.
6. The method according to example 5, wherein after the initiating, by the intermediate page, a second request and before the initiating a first request, the method further comprises:
   obtaining, by the intermediate page, a uniform resource locator (URL) from the intermediate server when the verification succeeds, wherein the URL corresponds to an authorization page guiding the user to authorize the target electronic wallet; and
   initiating, by the intermediate page, a redirection request to the wallet client based on the URL, so that the wallet client displays the authorization page, initiates an authentication request to the wallet server based on an authorization confirmation operation triggered by the user based on the authorization page, and returns an authentication result to the intermediate page, wherein
   the first request is generated when the authentication result indicates that authentication succeeds.
7. The method according to example 1, wherein after the initiating, by the intermediate page, a first request to a wallet client of the target electronic wallet, the method further comprises:
   obtaining and displaying, by the intermediate page, the subscription result.
8. A subscription authorization method, applied to an intermediate server corresponding to a third party, and comprising:
   receiving a subscription request from an intermediate page provided by the third party, wherein the intermediate page is activated, by an SDK embedded in a target client, in response to a subscription application initiated by a user, the target client runs in an operating system provided by a serving party, the SDK is provided by the third party, and the subscription application is used to apply for authorization to bind a first account of the user in a target electronic wallet to a second account of the user in the serving party;
   forwarding the subscription request to a system server corresponding to the serving party, and providing the intermediate page with a subscription request number that corresponds to the subscription application and that is returned by the system server; and
   performing forwarding between the system server and a wallet server of the target electronic wallet in response to that the system server is triggered by a binding request, so that the system server interacts with the wallet server, to complete the binding, wherein the binding request derives from a first request initiated by the intermediate page, and the first request carries the subscription request number.
9. The method according to example 8, wherein the performing forwarding between the system server and a wallet server of the target electronic wallet, so that the system server interacts with the wallet server, to complete the binding comprises:
   obtaining a target payment token for the first account from the wallet server based on the subscription request number provided by the system server, and storing the target payment token and a locally generated third-party token in association; and
   sending the third-party token to the system server, so that the system server binds the third-party token to the second account.
10. The method according to example 9, wherein the obtaining a target payment token for the first account from the wallet server based on the subscription request number provided by the system server comprises:
   sending a query request to the wallet server based on the subscription request number;
   receiving an authorization code and user identification information that correspond to the subscription request number and that are returned by the wallet server;
   providing the user identification information to the system server, so that the system server performs fraud detection based on the user identification information; and
   applying to the wallet server for a payment token based on the authorization code when the fraud detection succeeds.
11. The method according to example 10, wherein before the response to that the system server is triggered by the binding request, the method further comprises:
   sending a uniform resource locator (URL) to the intermediate page, so that the wallet client displays, based on the URL comprised in a redirection request initiated by the intermediate page, an authorization page that guides the user to authorize the target electronic wallet, and initiates an authentication request to the wallet server based on an authorization acknowledgment operation triggered by the user based on the authorization page, and further, the wallet server generates the authorization code when authentication succeeds, and stores, in association, the authorization code and the subscription request number carried in the authentication request, wherein
   the first request is generated when the authentication succeeds.
12. A subscription authorization method, applied to a system server corresponding to a serving party, and comprising:
   receiving a subscription request forwarded by an intermediate server corresponding to a third party, wherein the subscription request is initiated by an intermediate page provided by the third party, the intermediate page is activated, by an SDK embedded in a target client, in response to a subscription application initiated by a user, the target client runs in an operating system provided by the serving party, the SDK is provided by the third party, and the subscription application is used to apply for authorization to bind a first account of the user in a target electronic wallet to a second account of the user in the serving party;
   sending a generated subscription request number corresponding to the subscription application to the intermediate server, so that the intermediate server provides the subscription request number to the intermediate page;
   receiving, from a wallet client of the target electronic wallet, a binding request sent by the wallet client under triggering of the intermediate page; and
   interacting, based on the subscription request number carried in the binding request, with the wallet server through forwarding by the intermediate server, to complete the binding.
13. The method according to example 12, wherein before the receiving the binding request, the method further comprises:
   delivering, to the wallet client, an identity verification interface provided by the serving party, to perform identity verification on the user.
14. A computer system, comprising a memory, a processor, and a computer program that is stored in the memory and that is capable of running on the processor, wherein the processor is integrated into a target client, the target client is embedded with an SDK provided by a third party, the target client runs in an operating system provided by a serving party, and when the processor executes the program, the following steps are implemented:
   in response to a subscription application initiated by a user in the target client, activating, by the SDK, an intermediate page provided by the third party, wherein the subscription application is used to apply for authorization to bind a first account of the user in a target electronic wallet to a second account of the user in the serving party;
   initiating, by the intermediate page, a subscription request to a system server corresponding to the serving party by using an intermediate server corresponding to the third party, to obtain a subscription request number corresponding to the subscription application; and
   initiating, by the intermediate page, a first request to a wallet client of the target electronic wallet, wherein the first request carries the subscription request number, so that the wallet client initiates a binding request to the system server, and the binding request triggers the system server to interact with the wallet server of the target electronic wallet based on the subscription request number through forwarding by the intermediate server, to complete the binding.
15. A computer system, comprising a memory, a processor, and a computer program that is stored in the memory and that is capable of running on the processor, wherein the processor is integrated into an intermediate server corresponding to a third party, and when the processor executes the program, the following steps are implemented:
   receiving a subscription request from an intermediate page provided by the third party, wherein the intermediate page is activated, by an SDK embedded in a target client, in response to a subscription application initiated by a user, the target client runs in an operating system provided by a serving party, the SDK is provided by the third party, and the subscription application is used to apply for authorization to bind a first account of the user in a target electronic wallet to a second account of the user in the serving party;
   forwarding the subscription request to a system server corresponding to the serving party, and providing the intermediate page with a subscription request number that corresponds to the subscription application and that is returned by the system server; and
   performing forwarding between the system server and a wallet server of the target electronic wallet in response to that the system server is triggered by a binding request, so that the system server interacts with the wallet server, to complete the binding, wherein the binding request derives from a first request initiated by the intermediate page, and the first request carries the subscription request number.
16. A computer system, comprising a memory, a processor, and a computer program that is stored in the memory and that is capable of running on the processor, wherein the processor is integrated into a system server corresponding to a serving party, and when the processor executes the program, the following steps are implemented:
   receiving a subscription request forwarded by an intermediate server corresponding to a third party, wherein the subscription request is initiated by an intermediate page provided by the third party, the intermediate page is activated, by an SDK embedded in a target client, in response to a subscription application initiated by a user, the target client runs in an operating system provided by the serving party, the SDK is provided by the third party, and the subscription application is used to apply for authorization to bind a first account of the user in a target electronic wallet to a second account of the user in the serving party;
   sending a generated subscription request number corresponding to the subscription application to the intermediate server, so that the intermediate server provides the subscription request number to the intermediate page;
   receiving, from a wallet client of the target electronic wallet, a binding request sent by the wallet client under triggering of the intermediate page; and
   interacting, based on the subscription request number carried in the binding request, with the wallet server through forwarding by the intermediate server, to complete the binding.
17. A subscription authorization apparatus, integrated into a target client, wherein the target client is embedded with an SDK provided by a third party, the target client runs in an operating system provided by a serving party, and the apparatus comprises:
   an intermediate page activation module, configured to: in response to a subscription application initiated by a user in the target client, enable the SDK to activate an intermediate page provided by the third party, wherein the subscription application is used to apply for authorization to bind a first account of the user in a target electronic wallet to a second account of the user in the serving party;
   a request number obtaining module, configured to enable the intermediate page to initiate a subscription request to a system server corresponding to the serving party by using an intermediate server corresponding to the third party, to obtain a subscription request number corresponding to the subscription application; and
   a binding triggering module, configured to enable the intermediate page to initiate a first request to a wallet client of the target electronic wallet, wherein the first request carries the subscription request number, so that the wallet client initiates a binding request to the system server, and the binding request triggers the system server to interact with the wallet server of the target electronic wallet based on the subscription request number through forwarding by the intermediate server, to complete the binding.
18. A subscription authorization apparatus, integrated into an intermediate server corresponding to a third party, and comprising:
   a subscription request receiving module, configured to receive a subscription request from an intermediate page provided by the third party, wherein the intermediate page is activated, by an SDK embedded in a target client, in response to a subscription application initiated by a user, the target client runs in an operating system provided by a serving party, the SDK is provided by the third party, and the subscription application is used to apply for authorization to bind a first account of the user in a target electronic wallet to a second account of the user in the serving party;
   a subscription request forwarding module, configured to: forward the subscription request to a system server corresponding to the serving party, and provide the intermediate page with a subscription request number that corresponds to the subscription application and that is returned by the system server; and
   a forwarding module, configured to perform forwarding between the system server and a wallet server of the target electronic wallet in response to that the system server is triggered by a binding request, so that the system server interacts with the wallet server, to complete the binding, wherein the binding request derives from a first request initiated by the intermediate page, and the first request carries the subscription request number.
19. A subscription authorization apparatus, integrated into a system server corresponding to a serving party, and comprising:
   a subscription request receiving module, configured to receive a subscription request forwarded by an intermediate server corresponding to a third party, wherein the subscription request is initiated by an intermediate page provided by the third party, the intermediate page is activated, by an SDK embedded in a target client, in response to a subscription application initiated by a user, the target client runs in an operating system provided by the serving party, the SDK is provided by the third party, and the subscription application is used to apply for authorization to bind a first account of the user in a target electronic wallet to a second account of the user in the serving party;
   a request number sending module, configured to send a generated subscription request number corresponding to the subscription application to the intermediate server, so that the intermediate server provides the subscription request number to the intermediate page;
   a binding request receiving module, configured to receive, from a wallet client of the target electronic wallet, a binding request sent by the wallet client under triggering of the intermediate page; and
   a binding request processing module, configured to interact, based on the subscription request number carried in the binding request, with the wallet server through forwarding by the intermediate server, to complete the binding.
20. A computer-readable nonvolatile storage medium, wherein the storage medium stores a computer program, and when the computer program is executed by a processor, the method according to any one of examples 1 to 13 is implemented.

## Claims

1. A method for subscription authorization, the method performed by a target client, wherein the target client is embedded with an SDK provided by a third party, the target client runs in an operating system provided by a serving party, and the method comprises:
in response to a subscription application initiated (S201) by a user in the target client, activating (S202), by the SDK, an intermediate page provided by the third party, wherein the subscription application is used to apply for authorization to bind a first account of the user in a target electronic wallet to a second account of the user in the serving party;
initiating (S203), by the intermediate page, a subscription request to a system server corresponding to the serving party by using an intermediate server corresponding to the third party, to obtain (S207) a subscription request number corresponding to the subscription application; and
initiating (S208), by the intermediate page, a first request to a wallet client of the target electronic wallet, wherein the first request carries the subscription request number, so that the wallet client initiates (S210) a binding request to the system server, and the binding request triggers the system server to interact with the wallet server of the target electronic wallet based on the subscription request number through forwarding by the intermediate server, to complete (S211) the binding.

2. The method according to claim 1, wherein the target client is the wallet client, and initiating (S208), by the intermediate page, a first request to a wallet client of the target electronic wallet comprises:
initiating the first request to the wallet client through a first-type API comprised in the SDK, wherein the first-type API is used for intra-application inter-page invocation.

3. The method according to claim 1, wherein the target client is a merchant application client in which an intra-application purchase is made based on the second account, and initiating (S208), by the intermediate page, a first request to a wallet client of the target electronic wallet comprises:
initiating the first request to the wallet client through a second-type API comprised in the SDK, wherein the second-type API is used for cross-application invocation.

4. The method according to claim 1, wherein the operating system comprises a functional module supporting an intra-application purchase, and all merchant applications in which an intra-application purchase is made based on the second account in the operating system are developed based on the functional module; and
that the wallet client initiates the binding request to the system server comprises:
invoking (S209), by the wallet client, a first functional interface of the functional module, so that the functional module initiates the binding request to the system server.

5. The method according to claim 4, wherein before initiating (S208), by the intermediate page, a first request to a wallet client of the target electronic wallet, the method further comprises:
initiating, by the intermediate page, a second request to the wallet client, so that the wallet client invokes a second functional interface of the functional module, to trigger the system server to verify a qualification of the user in the serving party based on the subscription request number; optionally
wherein, after initiating, by the intermediate page, a second request and before the initiating a first request, the method further comprises:
obtaining, by the intermediate page, a uniform resource locator (URL) from the intermediate server when the verification succeeds, wherein the URL corresponds to an authorization page guiding the user to authorize the target electronic wallet; and
initiating, by the intermediate page, a redirection request to the wallet client based on the URL, so that the wallet client displays the authorization page, initiates an authentication request to the wallet server based on an authorization confirmation operation triggered by the user based on the authorization page, and returns an authentication result to the intermediate page, wherein
the first request is generated when the authentication result indicates that authentication succeeds.

6. The method according to claim 1, wherein after initiating (S208), by the intermediate page, a first request to a wallet client of the target electronic wallet, the method further comprises:
obtaining and displaying, by the intermediate page, the subscription result.

7. A method for subscription authorization, the method performed by an intermediate server corresponding to a third party and comprising:
receiving (S203) a subscription request from an intermediate page provided by the third party, wherein the intermediate page is activated (S202), by an SDK embedded in a target client, in response to a subscription application initiated (S201) by a user, the target client runs in an operating system provided by a serving party, the SDK is provided by the third party, and the subscription application is used to apply for authorization to bind a first account of the user in a target electronic wallet to a second account of the user in the serving party;
forwarding (S204) the subscription request to a system server corresponding to the serving party, and providing the intermediate page with a subscription request number that corresponds to the subscription application and that is returned by the system server; and
performing forwarding between the system server and a wallet server of the target electronic wallet in response to that the system server is triggered by a binding request, so that the system server interacts with the wallet server, to complete (S211) the binding, wherein the binding request derives from a first request initiated (S208) by the intermediate page, and the first request carries the subscription request number.

8. The method according to claim 7, wherein performing forwarding between the system server and a wallet server of the target electronic wallet, so that the system server interacts with the wallet server, to complete the binding comprises:
obtaining a target payment token for the first account from the wallet server based on the subscription request number provided by the system server, and storing the target payment token and a locally generated third-party token in association; and
sending the third-party token to the system server, so that the system server binds the third-party token to the second account.

9. The method according to claim 8, wherein obtaining a target payment token for the first account from the wallet server based on the subscription request number provided by the system server comprises:
sending a query request to the wallet server based on the subscription request number;
receiving an authorization code and user identification information that correspond to the subscription request number and that are returned by the wallet server;
providing the user identification information to the system server, so that the system server performs fraud detection based on the user identification information; and
applying to the wallet server for a payment token based on the authorization code when the fraud detection succeeds; optionally
wherein, before the response to that the system server is triggered by the binding request, the method further comprises:
sending a uniform resource locator (URL) to the intermediate page, so that the wallet client displays, based on the URL comprised in a redirection request initiated by the intermediate page, an authorization page that guides the user to authorize the target electronic wallet, and initiates an authentication request to the wallet server based on an authorization acknowledgment operation triggered by the user based on the authorization page, and further, the wallet server generates the authorization code when authentication succeeds, and stores, in association, the authorization code and the subscription request number carried in the authentication request, wherein
the first request is generated when the authentication succeeds.

10. A method for subscription authorization, the method performed by a system server corresponding to a serving party and comprising:
receiving (S203) a subscription request forwarded by an intermediate server corresponding to a third party, wherein the subscription request is initiated by an intermediate page provided by the third party, the intermediate page is activated (S202), by an SDK embedded in a target client, in response to a subscription application initiated (S201) by a user, the target client runs in an operating system provided by the serving party, the SDK is provided by the third party, and the subscription application is used to apply for authorization to bind a first account of the user in a target electronic wallet to a second account of the user in the serving party;
sending (S206) a generated (S205) subscription request number corresponding to the subscription application to the intermediate server, so that the intermediate server provides (S207) the subscription request number to the intermediate page;
receiving (S210), from a wallet client of the target electronic wallet, a binding request sent by the wallet client under triggering of the intermediate page; and
interacting, based on the subscription request number carried in the binding request, with the wallet server through forwarding by the intermediate server, to complete (S211) the binding.

11. The method according to claim 10, wherein before receiving (S210) the binding request, the method further comprises:
delivering, to the wallet client, an identity verification interface provided by the serving party, to perform identity verification on the user.

12. A computer system, comprising a memory, a processor, and a computer program that is stored in the memory and that is capable of running on the processor, wherein the processor is integrated into a target client, the target client is embedded with an SDK provided by a third party, the target client runs in an operating system provided by a serving party, and when the processor executes the program, the method of any one of claims 1 to 6 is implemented.

13. A computer system, comprising a memory, a processor, and a computer program that is stored in the memory and that is capable of running on the processor, wherein the processor is integrated into an intermediate server corresponding to a third party, and when the processor executes the program, the method of any one of claims 7 to 9 is implemented.

14. A computer system, comprising a memory, a processor, and a computer program that is stored in the memory and that is capable of running on the processor, wherein the processor is integrated into a system server corresponding to a serving party, and when the processor executes the program, the method of any one of claims 10 or 11 is implemented.

15. A computer-readable nonvolatile storage medium, wherein the storage medium stores a computer program, and when the computer program is executed by a processor, the method according to any one of claims 1 to 11 is implemented.
